# EUROPEAN PATENT APPLICATION

(11) **EP 0 999 717 A2**
(43) Date of publication of application: **10.05.2000**
(21) Application number: 98123485.9
(22) Date of filing: 14.12.1998
(51) Int. Cl.: H04Q 11/04, H04Q 7/24

(54) **Broadband wireless mesh topology network**

(30) Priority: 05.11.1998 US 187665
(71) Applicant: Caly, Inc., Santa Clara, California 95051 (US)
(72) Inventor: Berger, Josef, Santa Clara, California 95051 (US); Aaronson, Itai, Burlingame, California 94010 (US)
(74) Representative: Kahler, Kurt, Dipl.-Ing.

(57) **Abstract**

The invention discloses ways of implementing a broadband wireless network based on mesh topology, optimized for delivery of data, Internet, voice and multimedia to consumers, small offices and large company premises using data interfaces such as the IP standard interface and consumer multimedia digital bus interface. The invention comprises of customer premises wireless radios with the ability of adding and dropping data via standard interface as well as routing data between multiple wireless nodes. Each network node (SR) has a MAC (Media Access Control) layer that enables the routing and insertion of packetized data between multiple network nodes and between the nodes and external LAN or WAN data networks. The invention includes an optimized algorithm for automatic node admission to the network and dropping off the network as well as an algorithm for maintaining multiple routes for route diversity. This route diversity enhances the mesh network availability, reliability and allows load balancing. The invention enables the deployment of lower cost wireless access networks with easy deployment, low maintenance, and high accessibility suitable for commercial as well as residential high bit rate data delivery.

## Description

### TECHNICAL FIELD OF THE INVENTION

The present invention relates to the field of wireless communications in general and in particular to the field of high capacity broadband wireless networks designed for packet data transmission in the high frequency bands of the spectrum.

### BACKGROUND ART

The definition of high capacity broadband system is related to a system that operates at transmission rates above T1 (1.5MB/s) or E1 (2MB/s), usually up to 100MB/s or more per link and in frequency range above the 6GHz. Typically in the licensed bands at 10.150Hz to 10.65GHz, 24 to 31 GHz and 37 to 41 GHz part of the spectrum. New bands will be opened at 40GHz to 60 GHz as well and might also be available for unlicensed use. In those frequencies, robust transmission is achieved via a clear line of sight (LOS) between the transmitting and receiving radios.

Wireless communication networks enable competitive access to fiber, Hybrid fiber coax and twisted pair networks. Low bit rate wireless systems with rates up to T1 (1.5MB/s - US) and E1 (2MB/s - ETSI) were developed and deployed. These wireless systems are used in the low part of the spectrum, usually below 6 GHz where the bandwidth allowed to be used is limited. Examples of such systems include cellular systems at 900MHz 1.8 to 2 GHz, WLL (Wireless Local Loop) at 2.3 GHz and unlicensed wireless systems in the ISM (Industrial, Scientific and Medical) bands at 900MHz, 2.4 and 5.7GHz. Due to limited bandwidth in these bands, such systems operate in narrow bands and Low capacity per link. The demand for high capacity (above 1 to 2 MB/s) has increased dramatically in the last few years due to the spread of the Internet services as well as deregulation in the telecom industry that allows CELEC (Competitive Local Exchange Carriers) to create their own access infrastructure. As a result, regulators around the world have opened new bands above 10GHz for use. Those bands are usually licensed to be used by a single operator in a given area. The operator can deploy his wireless system in a topology he chooses to implement versus the prior situation where the law in each country required that prior approval for wireless links had to be obtained from a communication authority such as the FCC in the United States. This main difference of operation between PP (Point to Point) frequency assignment per link and assigning of a range of a broadband spectrum per well defined territories to be used by a single operator opens the market for innovative new topology implementations that can maximize the operator use of his spectrum and create higher capacity and more advanced wireless networks at those new opened mm wave spectra. Part of those spectra are also referred to in the literature as LMDS (Local Multipoint Distribution System) or LMCS (Local Multipoint Communication System) or PMP (Point to Multi-Point) systems. The current invention relates to new a topology that leverages from those spectral ranges licensed for use on a territorial basis, where new customer's radio could be added to the system at any location without prior approval.

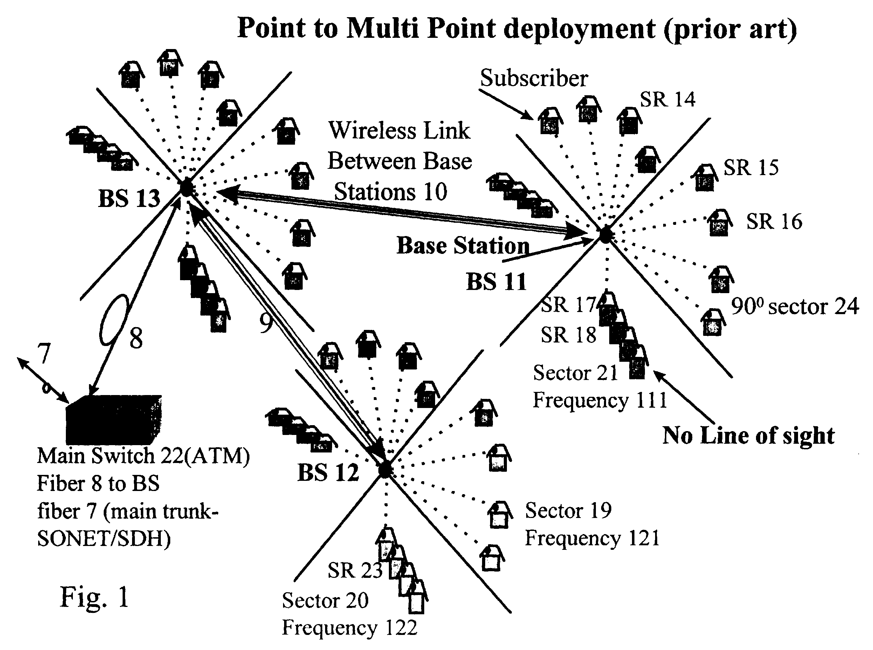

A typical state of the art topology for broadband wireless communication network is shown in Fig.1. The network is based on Point to Multi Point (PMP) access network connected via point to point (PP) links, such as wireless links 9, 10, or fiber (link 8). In Fig. 1, the base stations BS 11, BS 12 and BS 13 are positioned in topographically elevated locations in order to achieve direct line of sight (LOS) with the subscribers' wireless radios SR 14 - SR 18. Each base station comprises a multiplicity of sectorial antennas that transmit to a well defined fixed sectors such as 19, 20 and 21. To avoid interference between adjacent sectors, different frequencies are assigned to sectors that might interfere with each other. Thus sector 20 will use frequency 122, where adjacent sector 19 will use a different frequency 121. Sector 21 which belongs to a different base station would be assigned frequency 111 that, in certain conditions, should differ from frequency 122 to avoid signals from sector 21 interfering with the communication in sector 20. However, under the right conditions, frequency 111 could be similar to frequency 121 if no interference is going occur. Many locations do not have LOS such as SR 18 which is located behind SR 17.

Subscriber SR 17 in sector 21 can communicate with subscriber SR 16 in a nearby sector 24 via a circuit which follows the path from SR 17 to BS 11, through link 10 to BS 13, through link 8 to switch 22, and back via link 8, BS 13, link 10, BS 11 to SR 16. Similarly, subscriber SR 17 in sector 21 can communicate with subscriber SR 23 in sector 20 at a different base station via a circuit assigned by switch 22 from SR 17 to BS 11, through link 10 to BS 13, through link 8 to switch 22, and back via link 8 to BS 13, link 9 to BS 12 to SR 23 in sector 20.

In all these cases, a central switch such as an Asynchronous Transfer Mode (ATM) switch 22 may function as the center for the switching fabric through which all the traffic must pass. The same switch may include additional ports connected to fiber link 7 to a trunking WAN (Wide Area Network) backbone. Thus, a subscriber served by the wireless PMP access system can be connected to the rest of the world. The base station can convert the wireless protocol used for communicating over the air with its subscriber to a standard transmission protocol such as ATM.

Data from the base stations to the subscriber radios(down stream direction) is transmitted in a broadcast mode via sectorial antennas toward many subscribers located in well defined fixed angle sectors, say for example between 15 degrees to 90 degrees. The data is addressed to specific customers by assigning different addresses to each one of the data packets, using for example a TDMA (Time Division Multiple Access) scheme in a specific broadband frequency. In other prior art implementations, PMP systems assign a specific narrower frequency inside the operational spectral band for each subscriber for the duration of the communication with that subscriber. To maintain transmission in the up stream direction, each base station synchronizes the up link transmission from each one of the multiplicity of subscribers in each sector. The scheduling algorithm defines for each individual subscriber radio the transmission packet timing, and length, at a well defined frequency (TDMA). This synchronizes the arrival of packets from different subscribers, one after the other, in the base station. In a different prior art scheme, in an FDMA (Frequency Division Multiple Access) scheme, the base station assigns a specific frequency channel with defined bandwidth for each subscriber based on a request for transmission received on a service channel and priority scheduling algorithm. Other modes of operation such as code division multiple access (CDMA) could also be used for PMP systems.

The advantages of the prior art wireless PMP are:
1. Low cost for the subscriber unit. Most of the control and system intelligence is located in the base station.
2. Simple MAC layer, especially for virtual circuit assignment systems such as ATM or frequency allocation.
3. Simpler Base Station. It functions as a smart multiplexer of data from known subscribers towards and from an external switch (ATM for example).
4. Relay on standard existing technology for the switching. The switch, e.g. ATM, is external relative to the system.

The disadvantages of the prior art wireless PMP are:
1. Base station radio has to be located in an elevated location (expensive must) to maximize LOS coverage.
2. Only partial coverage can be achieved due to trees and shadowing effects of buildings.
3. High cost for the base station equipment and location acquisition and maintenance.
4. Trunking cost between the base station and the switch.
5. Need for one or more base switches to create system connectivity between subscribers and themselves or with the external world
6. As subscriber density increases in the sector the bandwidth per subscriber is reduced.
7. The availability of a sector is limited based on the longest link from the base station. Longer distance means less signal received from the subscriber, thus the packet signal level changes significantly.
8. The base station needs to be connected to the switch via expensive high capacity links, e.g. wireless or fiber OC- 3 or higher.
9. Requirement of a switch for creating the connection.
10. Each packet of data needs to be routed all the way to a switch and back, thus consuming large bandwidth resources of the system.
11. Limited capacity of the base station. Current state of the art capacity is less than 155MB/s per base station.
12. No route diversity.
13. No repeater functionality, all units communicate with centrally located base station.
14. As the need for higher capacity wireless access grows, more and more base stations have to be installed in the same area in closer proximity so the same frequency could be reused over and over.

### SUMMARY OF THE INVENTION

The wireless mesh network of the present invention comprises a plurality of nodes, each node comprising a radio frequency transmit circuit and a radio frequency receive circuit. Each node further includes a local port for connection to a user-provided system, including a LAN or a WAN connection, or a computing system. Each node further includes a data processing unit coupled to the transmit and receive circuitry and to the local port for exchanging data among the circuitry and the local port. There is a spatial flow determination means for transmitting and receiving data stream transmissions from specific nodes in the network. In particular, each node is in line of sight relation to a subset of nodes in the network. The spatial flow determination means for a given node selects from among its subset nodes either for transmission or reception of a data stream, or both. The data processing unit includes extraction means for extracting selected data from an incoming transmission that is targeted for the given node. The remaining data stream is then transmitted to the next node or nodes. Similarly, there is insertion means for inserting data into a stream being transmitted. In this way, an incoming data stream can have data extracted (dropped) into the node and output at its local port, while at the same time the data stream is inserted (added) with data from the given node as it is being transmitted.

In a preferred embodiment of the invention, at least some of the nodes include status information about other nodes in the network. In this way, a node has some information about the network. This information feeds into the spatial flow determination means and selects nodes for transmission thereto or reception therefrom based on such information.

At least some of the nodes also have means for assessing a characteristic of a received transmission. A means is provided for transmitting information relating to this characteristic to the sending node. The sending node adjusts its transmission parameters in response to such information.

The nodes include means for providing connectionless transmission of data, connection-oriented transmission of data, or a combination where one segment of the network is connectionless and another segment is connection-oriented.

### BRIEF DESCRIPTION OF THE DRAWINGS

Fig. 1 is a top plan schematic view of an area covered by three PMP (prior art) base stations. Each one of the base stations covers a 360 degrees using 4 sectors of 90 degrees. Two of the base stations are connected via wireless connection to the location of the other base station where a fiber connection transfers the information from all the base stations to a main switch. The main switch acts to create a connection between subscribers in the wireless access covered area as well as other subscribers either in the same area or in remote external areas via fiber trunking system (SONET or SDH).
Fig. 2 is a top plan schematic view of a Broadband Wireless Mesh Topology Network as claimed and described in the current invention. The wireless mesh is optimized for very high capacity packet transmission based on unique implementation of the network topology together with an optimized radio designed for operation in a wireless mesh network and the MAC (Media Access Layer) which enable the packet transmission over the mesh network.
Fig. 3 is a schematic diagram of a TDD (Time Division Duplex) wireless radio that can be used as SR (Subscriber Radio) at the current invention.
Fig. 4 is a schematic diagram of the Mesh Radio Network which allows spatial flow of information simultaneously between say node 1 and 4 as well as node 2 and node 0.
Fig. 5 is schematic diagram depicting the relationships between the PHY, MAC, and LLC protocol layers.
Fig. 6 is a schematic diagram of a mesh of 25 nodes.
Fig. 7 is a flow chart of the high level node scheduling FSM. (finite state machine).
Fig. 8 is a flow chart of the Admission FSM finite state machine process of the mesh network nodes.
Fig. 9 is a schematic description of a wireless radio mesh network as a virtual router with local interface port at the radio nodes and dynamic spatial route selection capability.

### BEST MODE FOR CARRYING OUT THE INVENTION

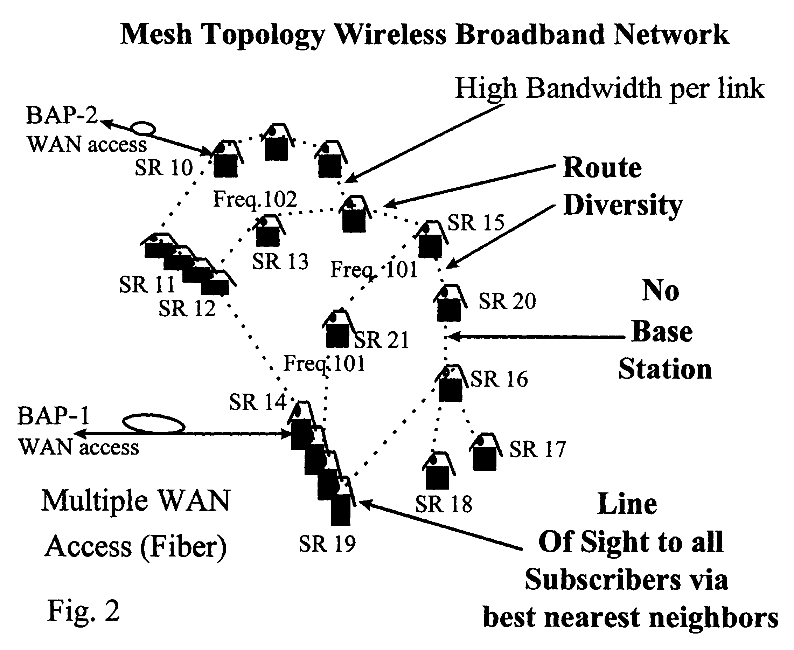

With reference to Figure 2, a mesh topology wireless network based on operation at mm waves frequencies is assumed. In accordance with the invention, the network comprises of multiplicity of Subscriber Radio (SR) nodes deployed in the vicinity of the customer's premises and communicating with each other as well as a subscriber-provided internal data system such as LAN (Local AREA Network), WAN (Wide Area Network) or a typical PC. Direct Line Of Sight (LOS) between subscribers exists between each node in the topology and a subset of the nodes. Multiple reflections can be ignored. The SR acts as a network node with the ability to receive data packets from neighboring nodes and to analyze the destinations of the packets of data. The SR can drop data addressed to its one or more local ports and add data from its local port(s). The SR directs received data packets addressed to other network nodes as well as packets received from its local port(s) to its neighboring nodes based on selection of routes available in the network towards the packets final destinations. The nodes constantly receive status information from other nodes, thus allowing them to develop a scheduling mechanism for real time wireless virtual routing of data packets over the mesh network. The Mesh network can therefore be viewed as a virtual router, being distributed over a topographically diverse area where the SR local ports are the router ports. An important aspect of the invention is the ability of the nodes to decide its own data routing of received data packets by sharing status information among themselves via a real time scheduling algorithm. This scheduling algorithm allows the SR node to select available packets routes at each moment. For example, the packets between the same source and destination may travel via multiple different routes or via the same route depending on route availability. To overcome varying delays due to different routing, the SR node may rearrange the order of certain data packets arriving at different times in order to create a well defined data stream at the local port(s).

Another important aspect of the invention is an automatic admission process for new nodes joining the system that were originally unaffiliated with the network. The SR nodes have the ability to study their local area and find those SR nodes with whom they can create a communication. The SR nodes periodically update their own status information relating to the surrounding nodes with which they have LOS.

The SR nodes can create directional communication with certain nodes simultaneously as other nodes in the surrounding vicinity communicate with other nodes. This directionality of receiving data and transmitting data is accomplished by a combination of time division access combined with transmission in a selected sectorial region. The selection is accomplished by either by using a fixed angle sectorial antenna (30, 45, 90 degrees), by using beam steering capability via selection of sectorial antennas, or by using a phased array antenna, which could be one-dimensional antenna only for terrestrial use or a two dimensional for terrestrial and very high altitude (outer space) use.

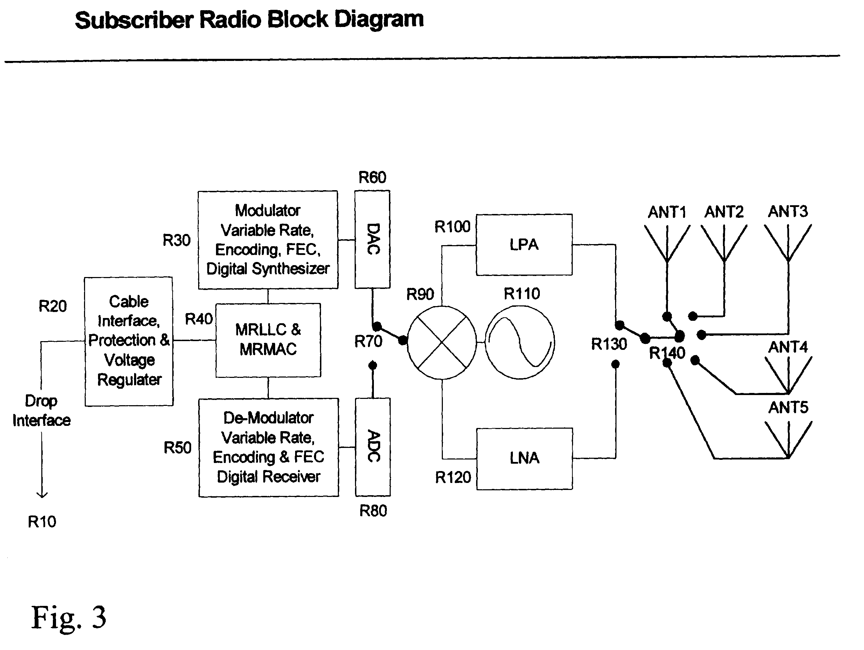

Subscriber Radio -(SR). Each Subscriber Radio (SR) acts as a network node and has the unique capability, per the current invention, to communicate at high frequency (above say 6 GHz) with at least two other SR Network nodes with whom LOS exists. SR 16 for example may communicate with SR 17, SR 18, SR 19 and SR 20 thus acting as a repeater for an information transmitted say from WAN Access BAP-1 (Back Bone Access Point) to SR 18, or from SR 17 to SR 19. The SR Network nodes can also add and drop packets of data via a local interface, such as 100/10 Base T, IEEE 1394, or other standard interfaces. In another variation of this invention, the SR may change its frequency channel when it communicates with different SR's around it. This increases network throughput with reduction of mutual interference. (a detailed description of an example of a reduction to practice of the subscriber radio is given in Fig.3 and described below).

Line Of Sight (LOS) - In the current wireless mesh topology, the SR can perform the functionality of bridging and partial routing of data packets. As a result, data can be routed from one SR to another. Thus an SR should be in line of sight with at least one other SR. This network topology enables the construction of a new type of wireless network where subscriber access is achieved by bypassing LOS obstacles. In Fig. 2 for example, if SR 18 does not have LOS with SR 19, then communication with BAP 1 could still be established via SR 16 to SR 19, or with another route via SR 20 to SR 15. This arrangement has the advantageous property that when the density of the system increases, the ability to establish LOS or multiple LOS to each subscriber increases. It is noted that when initial network deployment starts, an initial seeding of an area with certain amount of SR's located in mutually visible locations, could be of an advantage.

Throughput - The throughput of the wireless mesh network of the current invention has the unique property that it increases as the density of subscriber increases. The reason for the increase of capacity is due to the addition of available high speed links that enables the routing of data packets among multiple paths inside the network. This phenomena is unique to the high frequency mm wave MESH network of the current invention, where multiple links operating at the same mm wave frequency can operate in the same region where the MAC layer synchronizes their beams to avoid mutual spatial interference. The MAC layer also prevents temporal interference by synchronizing the mutual transmission timing of potentially interfering SR's located in the same area and operating in the same frequency and with the same beam overlapping. The current invention is advantageous in that propagation of these high frequency beams demand direct LOS between nodes. Consequently, all reflected beams are absorbed and thus do not interfere with the network operation. This is also a significant advantage versus any installation of wireless mesh topology at low frequencies say below 6 GHz, and specifically below 3GHz, where multiple reflections via non line of sight reception interfere dramatically with the network performance and reduce the network capacity when subscriber count increases in the area. Another significant advantage also exists versus any prior aft PMP wireless networks at mm waves; in prior aft systems the throughput per sector is fixed and when additional subscribers join the network, the network capacity per subscriber is linearly reduced.

MAC Layer - The Subscriber Radio comprises a MAC layer, per the current invention, that studies the network topology in the surrounding, identifies the locations of nearby SR's and their addresses. The MAC layer in each SR analyzes the packets received from each of the SR network nodes around it as well as from the SR local interface port. For packets arriving from its local port, the MAC layer defines each packet's routing based on the packet destination address. It adds more bits of information to be used for FEC (Forward Error Correction) and over the air encryption (if required). Data packets arriving over the air from a nearby SR are analyzed based on their addresses, and are retransmitted or dropped locally. A possible arrangement for broadcast transmission from say SR 16 towards SR17 and SR 18 simultaneously could be accomplish by a single transmission where both SR's are located in the same beam footprint or by repeating transmission in the direction of each one of those SR's. This unique combination of wireless packet radio with internal packet data routing and/or bridging capability enables the implementation of the wireless mesh network topology.

Route Diversity- The MAC layer is also responsible for identifying the routing paths available from its address to the destination address. In the case of routes which are blocked, the MAC layer may route the packets via alternative routes. SR 15, for example, may receive data from BAP 1 via SR 12 and SR 13 or via SR 19 and SR 16, or via SR 21. It also can communicate outside of the network via multiple BAP's such as BAP-1 and BAP- 2. This provides a dramatic increase in network reliability, and resistance to weather rain fading that may block certain paths for a short time.

Automatic Admittance - An SR joining the network by using an admitting process, will scan the frequency channels as well as the spatially different directions if it is equipped with a beam steering capability. It will try to be accepted to the network. If it is registered in the system as a legitimate Network Node, the network will allow it to join and will update its information in the other nodes.

Channel selection - The network may select specific frequency channels for different areas or links. In addition, an optimized spectrum allocation could be downloaded from the NMS (Network Management System) based on network data flow information observed and studied by an external system. This input allows better optimization as well as manual definition of the channels used in different areas. In Fig. 2, the links from SR 12 may be allocated Frequency channel 102 where SR 15 may use frequency channel 101 for communicating with SR 21.

Multiple WAN Access - The network is designed to operate with a multiplicity of WAN Accesses such as BAP-1 and Bap-2, shown in Fig. 2. This allows convenient access to the mesh wireless network where all that is needed is adding a SR at the BAP's, versus a PMP architecture where there is a need to continue the backbone trunking system (SONET/SDH) towards the base stations, typically located in topographically elevated locations. An advantage over the prior arises from the fact that multiple high-speed trunking connections can now be used to increase the total flow of data in and out of the network, thus dramatically increasing its total throughput capacity. Route diversity in and out of the network is another by-product of the multiple WAN access points.

Frequency reuse - As a consequence of operation via nearby neighbors, the possibility of frequency reuse is significantly increased. This allows dramatic bandwidth increase versus non-LOS systems at lower frequencies (< 6 GHz) as well as versus PMP systems where transmission is done into a wide sectorial region.

Higher Bandwidth per link - Due to the short distance between the subscribers, which become shorter as density increases, the signal strength reaching the receivers is significantly higher as compared to PMP systems. As a result, the radio links can operate at higher bit rates in the same frequency band. This could be achieved by employing a high QAM modulation technique. In addition, since an operation of one link is independent from the nearby links, each link can adjust its bit rate to optimize the BER (Bit Error Rate) based on the signal level received at each moment. This is in contrast to PMP systems where the Bit rate in the sector is defined based on the longest link in the sector.

Mesh network availability - Wireless mesh network availability per the current invention increases significantly versus other topologies (e.g. PMP) due to the shorter distances between the multiplicity of the SR's. Another increase in availability is due to the network's ability to change (increase) the power transmitted at each segment of the network independently of other segments of the network. In addition, the network can the increase sensitivity of each segment of the network (and reducing the bit rate) without significant change of total network performance. Thus, for example, when a strong rain creates fading that propagates through the mesh network, some links will increase their power to boost signal strength, and may also increase sensitivity by reducing their bit rate to improve reliability. As a result the SR will get its data packets from the same links (maybe at lower bit rate) or from other links which are less influenced by the rain fading.

Mesh Network reliability - The current invention mesh network can operates via multiple routes simultaneously by enabling each SR to receive a stream of packets from multiple directions. And via its MAC layer, the SR can rearrange the order of the arriving data to allow packets arriving via longer routes to be dropped in the right order. As a result of this route balancing capability, the network can operate reliably even when some nodes are non-operational.

Backup - An increase in local reliability can be implemented by using more than one SR in the same location (node) connecting to the same subscriber LAN. The two SR's, for example, can operate simultaneously and route information to the same location. In the case that one SR fails the second continues to operate with increased bit rate to compensate for the loss of the first radio.

Increase WAN access capacity - If the capacity from the mesh to the BAP needed to be increased, an additional SR could be added at the same location by connecting its local interface to a say second 100 Base T interface of the WAN router located at the BAP. In this case, the dual SR's provide an increase in the bit rate from and to the wireless mesh, in addition to providing backup redundancy in case one of them fails.

Low Orbit Satellite and high-flying communication transponders - The mesh wireless topology can also be used to communicate with Network Radios that moves slowly in a specified trajectory over the Earth. Those low orbit satellites, or high-flying transponders located in airplanes, can act as repeaters/ routers and thus enable access to multiple points in the mesh network. For such an operation, the radio may communicate with the satellite by adjusting its beam to scan known trajectories in the sky. An advantage arises from the ability to establish LOS to almost any location.

Polarization diversity - The system may use different signal polarizations (Vertical or Horizontal) for different sub groups in the same coverage area to increase total capacity and/or improve interference immunity.

Refer now to Figure 3 for a further discussion of the subscriber radio in accordance with the present invention. The Subscriber Radio may include the components as described in the schematic diagram of Fig. 3. As can be seen, the radio uses a time division duplex (TDD) scheme. The main advantages of using TDD radios in the mesh topology include: a TDD radio can operate asymmetrically (i.e. transmit and receive rates are different), which is better suited for the packet network of this invention. Data packets may flow in different directions and thus higher capacity may be needed for transmission on certain segments in certain directions for higher period of time than in the reverse direction. TDD radios have no diplexer to separate the transmit and receive signals in two different frequencies. Thus the radio can scan larger a spectrum. By eliminating the diplexer, this reduces the SR cost as compared to FDD schemes which requires a diplexer.

The main components of a TDD radio as shown in Fig. 3 are:
R10 Drop Interface - This is a local interface port to customer premises. The local port may include a 10/100Base-T, ATM, IEEE 1394 or a custom interface, for connection to a LAN or WAN or to a computer. In addition power can be provided on the same cable.
R20 Cable Interface - This provides safety protection and power regulation circuitry.
R30 Digital Transmitter - This typically comprises standard circuitry known in the art. They include a variable level modulator, FEC encoder and channel synthesis circuitry.
R40 Mesh Radio Media Access Controller and Link Layer Controller - This layer provides link layer ARQ, packet size adaptation, priority queuing, scheduling and routing of virtual circuits and optional encryption of data from the local port and decryption of data dropped to the local port.
R50 Digital Receiver - This typically comprises standard circuitry known in the art. They include a digital tuner, variable level demodulator and FEC decoder circuitry.
R60 Digital to Analog Converter
R70 Transmit/Receive TDD Switch - This switch together with switch R130 perform the switching of the radio between transmit and receive modes.
R80 Analog to Digital Converter
R90 Mixer
R100 Linear Power Amplifier
R110 Local Oscillator R120 Low Noise Amplifier
R130 Transmit/Receive TDD Switch - This switch together with switch R70 perform the switching of the radio between transmit and receive modes.
R140 Antenna Selection Switch - This switch, under the control of the MRMAC routing circuit, performs directional antenna selection to provide spatial flow (direction) control of data stream transmissions; i.e. directed transmissions to and from specific nodes in such a manner that other nearby nodes do not receive such transmissions.

ANT1 through ANT5 Antennas - These antennas are directional (sectorial) and provide narrow beam transmission and reception from a selected spatial azimuth (or elevation - in case of satellite communication). Fig. 3 shows five antennas for illustration purpose only. The present invention is intended to support any number of antennas. In the case of a phased array antenna, different circuitry is required to control the relative phase shifts of the elements comprising such an antenna to provide beam steering capability. Directed transmission capability is known in the art. Any equivalent selective transmission scheme in addition to the above discusses schemes would work equally well in the present invention.

### MAC (Media Access Control) Layer

The current invention implementation is based on the introduction of a sophisticated new MAC layer designed and specified to accommodate the wireless mesh network requirement. A summary of the MAC layer operational requirements and the main scheme of operation is given below.

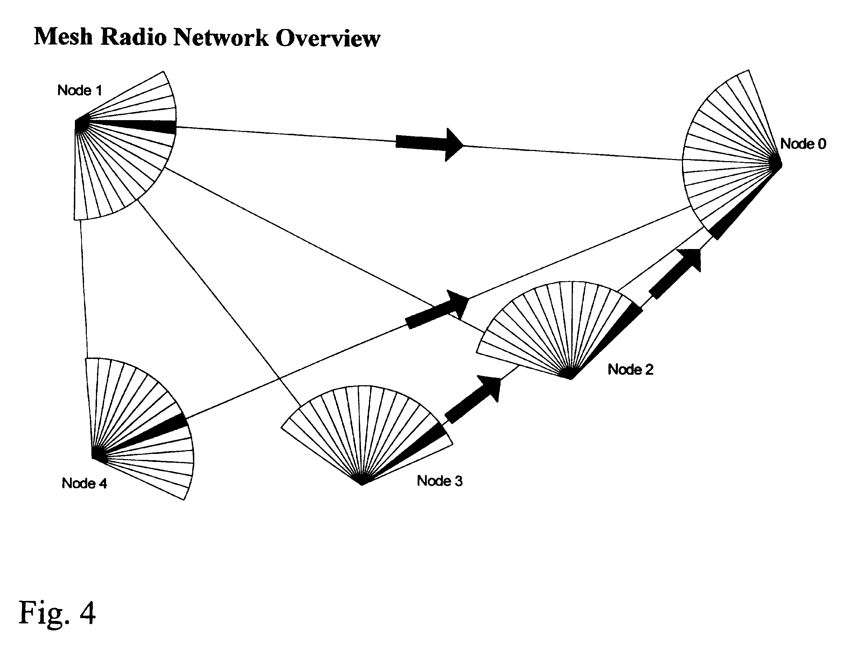

Figure 4 illustrates some of the principles that govern the operation of a radio mesh network, assuming a radio with ability to communicate in a large sector either by scanning its beam or by selectively creating a communication with one of the SR's in its sector such as by the use of a directional antenna or a phased array antenna as discussed above. The other SR's in the sector that might interfere with the communication are controlled by the MAC layer to remain silent during the scheduled transmission.

The current invention high level MAC layer and its main definitions are described below:

Directional Transmission - Each node can choose a spatial direction in which to transmit based on the locations of the receiving nodes in its LOS. The receiving nodes select the direction from which to receive based on the location of the transmitting nodes in its LOS.

Scheduled Transmission - Each node can transmit only when their transmission cannot cause interference to other transmissions. A transmission schedule known by every node serves to synchronize such transmissions.

Concurrent Transmissions - Multiple radio nodes can transmit concurrently when they will not cause interference. In Figure 1, radio node 2 can transmit to radio node 0 while radio node 4 is transmitting to radio node 1.

Mesh Radio Media Access Control (MRMAC) - The MRMAC is a set of procedures and algorithms responsible for routing and scheduling packet transmission in the mesh radio network of the present invention. All the radio nodes that participate in the radio mesh network implement the MRMAC functionality. MRMAC is the distributed intelligence that binds a collection of radio nodes into a highly efficient radio packet network.

Mesh Radio Physical Layer (MRPHY) - The MRPHY is a radio physical layer which is compatible with the MRMAC and provides the necessary capabilities to allow scheduled transmissions and routing of data packets in a mesh radio network.

Mesh Radio Link Layer Control (MRLLC) - The MRLLC is the protocol layer responsible for adapting user protocol transfers to the MRMAC. It performs such functions as priority classification, automatic re-transmission requests (ARQ) and packet size adaptations.

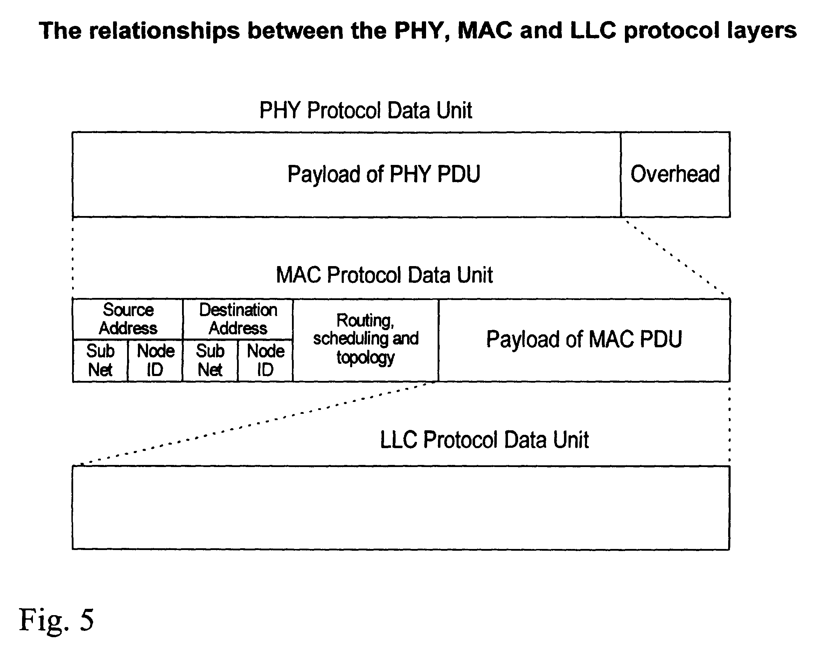

Protocol Data Units - The MRMAC is a protocol layer that lies between the MRPHY and the MRLLC as described in Fig. 5. Figure 5 depicts the relationships between the PHY, MAC and LLC protocol layers.

### MRMAC Requirements:

Support of higher layer transport protocols - The MRMAC supports both fixed PDU and variable PDU transport protocols such as ATM, Frame Relay and IP. The MRMAC provides QoS (quality of service) provisions suitable for ATM and IP.

Transfer types - Both asynchronous and isochronous transfers are supported.

Transfer sizes - The MRMAC supports both fixed size and variable size packet transfers. The minimal packet size is 48 octets and the maximum packet size is 2000 octets.

Throughput - The MRMAC throughput is at least 80% of the MRPHY capacity. In the special case where all the radio mesh traffic is directed to and from one radio node that is attached to the WAN backbone (BAP), the throughput is at least 80% of the WAN link capacity.

Delay - The isochronous delay for any node in the sub-net to and from the BAP is less than 6ms. The asynchronous delay is less than 15ms.

Delay variation - Delay variation for isochronous transfers does not exceed 2ms.

Radio mesh configuration - The MRMAC accommodates radio nodes joining and leaving the radio mesh network without causing undue disruption.

Optimization - Radio nodes should be able to self organize in a sufficiently optimized manner, without the need for external intervention. The radio nodes shall have interfaces that allow a centralized control function to further optimize their topology and routing selection.

Path diversity - Available alternative physical paths shall be utilized for redundancy and load balancing.

Plug and Play - Installation of new nodes shall not require alignment of provisioning by the field installer.

Following is an example of an implementation of MRMAC:

### Radio node initialization process

Neighbors - Each node contains a map of all other nodes in the sub-net with which it can have direct (LOS) communication. The information includes:

**Table 1**

| Data | Notes |
|---|---|
| Node ID | Could change with nodes joining and leaving the sub-net |
| Status | |
| Beam direction | 1 of 16 possible beam azimuths |
| Nodes that would be interfered with | A list of directed node pairs that would experience interference when transmitting at this direction |
| Next receive time | Scheduled next reception from the neighboring node |
| Next transmit time | Scheduled next transmission to the neighboring node |
| Link parameters for data | Power, timing, rate, FEC, modulation, etc. |
| Link parameters for status | Could be different for latency reduction |

Routes - Each node has a route table describing how to get a packet to any MAC destination. The information includes:

**Table 2**

| Data | Notes |
|---|---|
| Destination node | |
| First hop node ID | |
| Preference weight | When multiple routes are available |

Overview of process - After initialization of the nodes and the radio mesh network, each node possesses the information described in Tables 1 and 2. Packet queues are formed at each node from both node-originated traffic and traffic that is being forwarded through the node at its local port. A node will consult its tables for each packet destination and decide, based on scheduled handshakes and preference weighting, where a packet transmission is to go and when such transmission is to be attempted. At the scheduled handshake times, the radio nodes arrive at a mutual decision and the transmission is scheduled. That decision will take into account potential interference between nodes. It is beneficial to include the neighbors' scheduled handshakes in each node. This will expedite interference avoidance procedures.

### Quantitative considerations

Handshake - The handshake procedure involves transmission of 62 octets from originator to responder, another 64 octets from responder to originator and a final 62-octet packet from originator to responder. There will be two octets of guard time between transmissions. The 62-octet handshake packet includes FEC and other overhead. Total time for handshake will be 192-octet that is equal to 11.71875(Sec. The frequency of handshakes will depend on the number of neighbors, load and other factors. It is clear that an optimum frequency will be maintained in order to maximize throughput.

Payload packet size - Asynchronous transfer packet size will vary between 72 and 1784 octets inclusive of FEC and other overhead. Isochronous packet size will vary between 64 and 256 octets inclusive of FEC and overhead. The timing ranges will be:

**Table 3**

| Type | Size | Time at 128Mbit |
|---|---|---|
| Asynchronous | 72 - 1784 octets | 4.39453125 -108.88671875 µSec |
| Isochronous | 64 - 256 octets | 3.90625 - 15.625 µSec |
| Handshake | 192 octets | 11.71875 µSec |

Table 3 indicates that if every packet transfer requires a handshake, the throughput through a node will average well below 90% of the link. Clearly some degree of pre-scheduling will be required. On the other hand, if we assume some queuing of say 500 µSec, the throughput will be more reasonable.

Handshake timing - Handshakes will vary based on the size of the queues of the neighboring nodes. Packet transfers will carry the same type of information as the handshake process, the periodic handshakes need to be scheduled only when the link between neighboring nodes quiet uses.

Preference weights - Each node can maintain its route preference weights to reflect route conditions with a good degree of accuracy. Long term monitoring processes that are external to the radio mesh network will be used to further optimize the routing preference weights.

Handshake scheduling - We would like to have a simple scheme for scheduling handshakes between near neighbors, let us first assume that we need to support variable length packets. We are immediately faced with a problem. If the handshakes with near neighbors are pre-scheduled, then the interval has to allow the maximum-length packet transfer. However, that may cause the nodes to waste much time (bandwidth) between handshakes when some of the handshake intervals do not require packet transfers. The preferred approach is to have handshakes scheduled at a high frequency, but to allow nodes to miss handshakes. The handshake scheduling-algorithm of the invention will allow a radio node to miss its appointment with some neighbors when it is involved in a packet transfer with some other neighbor. The affected node will continue with its schedule and the tardy node will resume its handshaking schedule, when its packet transfer is complete.

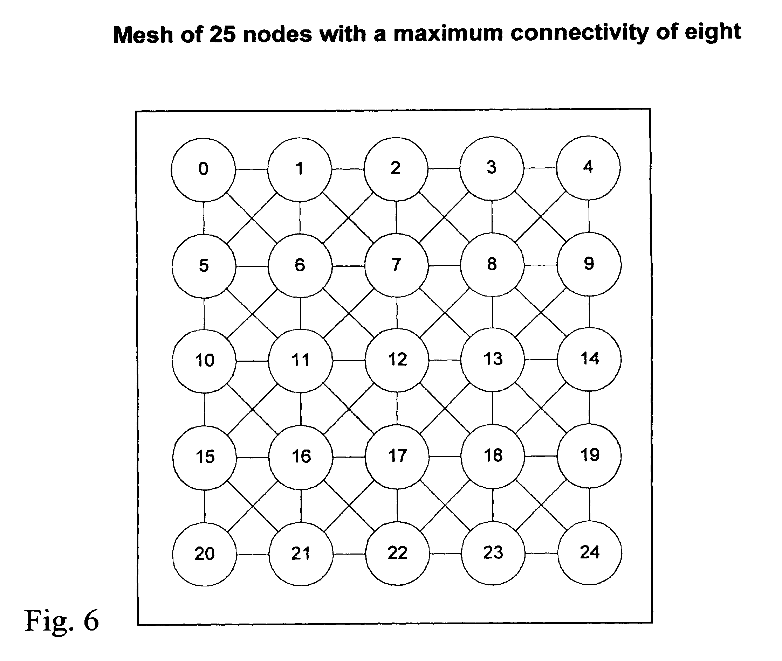

Figure 6 depicts a mesh of 25 nodes with a maximum connectivity of eight, each node is connected with a maximum of eight neighboring nodes. Assume that each node handshakes with one of its neighbors every τ seconds and that a full handshake cycle takes 8τ seconds. To satisfy the isochronous requirements we shall make 8τ equal to some integer multiple of 125 µseconds.

**Table 4**

| Node | Neighbor Scheduled | | | | | | | |
|---|---|---|---|---|---|---|---|---|
| | 0 | τ | 2τ | 3τ | 4τ | 5τ | 6τ | 7τ |
| 0 | 1 | | | 5 | | 6 | | |
| 1 | 0 | 5 | | 6 | 7 | | 2 | |
| 2 | 6 | 7 | | 8 | 3 | | 1 | |
| 3 | 7 | 8 | | 4 | 2 | | 9 | |
| 4 | 9 | | | 3 | | | 8 | |
| 5 | 11 | 1 | | 0 | 10 | | 6 | |
| 6 | 2 | 10 | 7 | 1 | 11 | 0 | 5 | 12 |
| 7 | 3 | 2 | 6 | 11 | 1 | 8 | 12 | 13 |
| 8 | 13 | 3 | 9 | 2 | 12 | 7 | 4 | 14 |
| 9 | 4 | | 8 | 13 | | 14 | 3 | |
| 10 | | 6 | 11 | | 5 | 15 | | 16 |
| 11 | 5 | 12 | 10 | 7 | 6 | 17 | 16 | 15 |
| 12 | 17 | 11 | 13 | 16 | 8 | 18 | 7 | 6 |
| 13 | 8 | 14 | 12 | 9 | 17 | 19 | 18 | 7 |
| 14 | 18 | 13 | | 19 | | 9 | | 8 |
| 15 | | 16 | 20 | | 21 | 10 | | 11 |
| 16 | 21 | 15 | 17 | 12 | 22 | 20 | 11 | 10 |
| 17 | 12 | 18 | 16 | 21 | 13 | 11 | 22 | 23 |
| 18 | 14 | 17 | 19 | 22 | 23 | 12 | 13 | 24 |
| 19 | 24 | | 18 | 14 | | 13 | 23 | |
| 20 | | | 15 | | | 16 | | 21 |
| 21 | 16 | 22 | | 17 | 15 | | | 20 |
| 22 | 23 | 21 | | 18 | 16 | | 17 | |
| 23 | 22 | | 24 | | 18 | | 19 | 17 |
| 24 | 19 | | 23 | | | | | 18 |

Table 4 lists a possible handshaking schedule for the mesh depicted in Fig. 6. The scheduling algorithm will prevent a node from missing a neighbor too many times.

### High level node scheduling finite state machine (FSM)

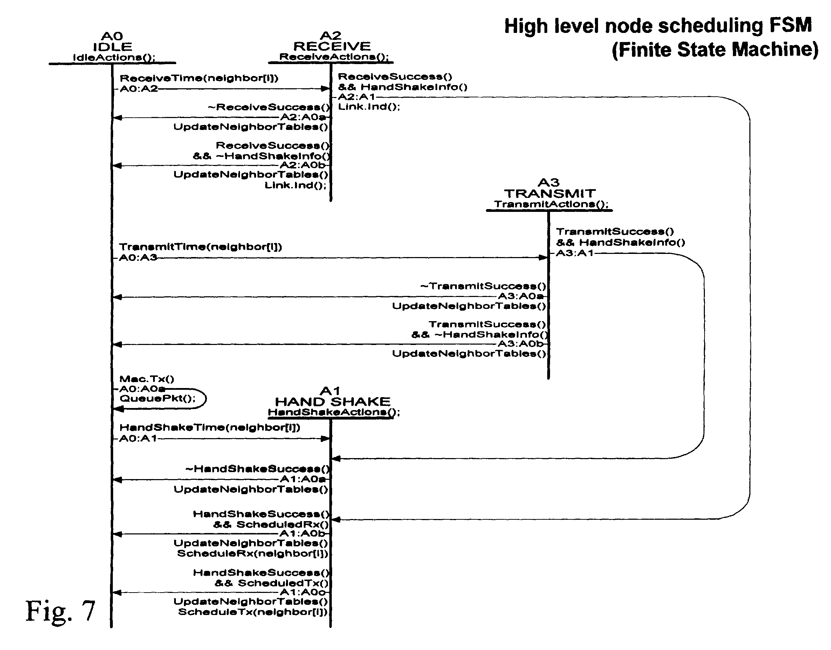

Figure 7 shows a finite state machine chart. Each state and transition is explained below:

State A0 the IDLE state - This is the MRMAC Default State. The MRMAC will stay in this state and wait for some external event or timer expiration to trigger a transition to one of the other states. The IdleAction() is a procedure that is executed upon entry to the Idle state and performs such housekeeping tasks as timer initialization, table initialization, etc.

A0 => A2 - A neighbor appointment schedule timer triggers this transition. This transition will happen for a neighbor appointment that had been previously scheduled for receiving a packet from the neighboring node.

A0 => A3 - A neighbor appointment schedule timer triggers this transition. This transition will happen for a neighbor appointment that had been previously scheduled for transmitting a packet to the neighboring node.

A0 => A0a - The MRLLC triggers this transition by using the Mac.Tx() procedure to request transmission of a packet. The QueuePkt() procedure performs the queuing of the packet according to the required priority. At this time a preferred route is associated with the packet based on the routing and status information gathered from the radio mesh. This route is the assumed to be the best route based on load factors that exist in the neighboring nodes. The quality of the radio links with the neighbors, as well as the priority of the packet, are taken into account when the preferred route is chosen. The nature of the requested transfer, Isochronous or Asynchronous, determines the scheduling priority.

A0 => A1 - A neighbor appointment schedule timer triggers this transition. This transition will happen for a neighbor appointment that had been previously scheduled for exchange of status with a neighboring node.

State A1 the HANDSHAKE state - In this state, the node engages in a status exchange with a neighboring node. The exchange updates both nodes' view of the other's status, including packet queues, route availability and future schedules. The HandShakeActions() procedure is performed upon entry into this state and performs all the relevant housekeeping tasks.

A1 => A0a - This transition is triggered by the occurrence of a failure in the handshake process. The UpdateNeighborTables() procedure is invoked to record this failure and to possibly schedule a future handshake appointment.

A1 => A0b and A1 => A0c - These transitions are triggered by a successful handshake exchange. The procedures ScheduleRx() and Schedule Tx() may be invoked to schedule future appointments for transmission or reception of packets. The UpdateNeighborTables() is invoked to record the updated neighbor status information.

State A2 the RECEIVE state - A node enters this state when it is ready to receive a previously scheduled packet transmission. The procedure ReceiveActions() is invoked to perform the necessary housekeeping functions such as buffer allocation and timer maintenance.

A2 => A1 - This transition is triggered by a successful reception of the scheduled packet that includes a status update. The Link.Ind() procedure is invoked to indicate to the MRLLC that a packet has arrived.

A2 => A0a - This transition is triggered by a failure to receive a scheduled packet. The UpdateNeighborTables() procedure is invoked to record this and to possibly schedule another appointment with this neighbor.

A2 => A0b - This transition is triggered by a successful reception of the scheduled packet which does not include a status update. The Link.Ind() procedure is invoked to indicate to the MRLLC that a packet has arrived.

A3 the TRANSMIT state - A node enters this state when a scheduled appointment to transmit a packet to a neighbor, has arrived. The TransmitActions() procedure is invoked to perform the necessary housekeeping functions such as buffer and timer management.

A3 => A1 - This transition is triggered by a successful transmission, which included the exchange of updated status information.

A3 => A0a - This transition is triggered by a failure in the packet transmission. The UpdateNeighbortables() procedure in invoked to record the failure and possibly schedule a future attempt to transmit the packet.

A3 => A0b - This transition is triggered by a successful transmission, which did not include the exchange of updated status information.

### Admission Process

The mesh radio network incorporates a distributed admission protocol. The purpose of the admission protocol is to enable radio nodes to join the network and become an efficient participant in the mesh-radio packet-transfers, without interfering with ongoing packet transfers.

### Overview of the Admission Process

When a radio node powers-up and discovers that it is not affiliated with a radio mesh, it shall transition into the Admission-Pending State. The radio node consults its configuration database that is stored in non-volatile RAM to determine its mesh radio affiliation. In the Admission-Pending State, the radio node shall listen for admission invitation signals from potential neighbors. Once the radio receives an invitation signal, it will begin exchanging status information with its first neighbor and through it, learn about the schedules of the immediate neighborhood and thus begin to exchange status information with additional neighbors. Once the radio node accumulates sufficient routing and scheduling knowledge through its exchanges with its neighbors, it will become ready for normal packet transfers and thus transition to the normal scheduling state.

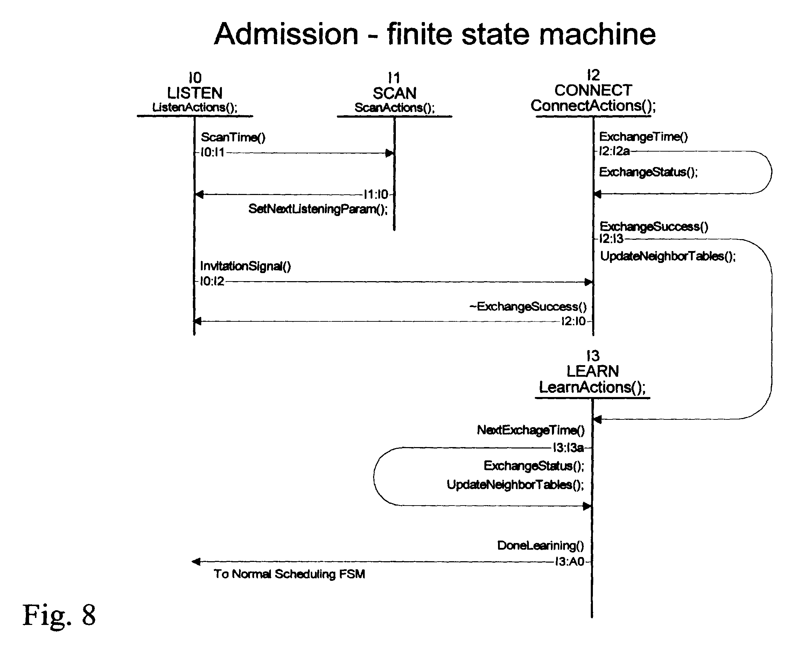

Figure 8 shows the sequencing which occurs when an unaffiliated node powers up and attempts to join the network. Following is a description of the states and the transitions comprising the admission finite state machine which defines the sequence. The radio node begins by scanning the neighborhood for admission invitation signals. It then attempts to connect with a neighbor and continues learning the neighborhood by establishing status exchange schedules through its first contact.

I0 LISTEN - This is the initial state in the admission FSM, an unaffiliated radio node enters this state from the power-up process. The ListenActions() procedure performs housekeeping functions such as table initialization and setting up the scanning process in the frequency and spatial domains.

I0 => I1 - The scan timer triggers this transition. The radio node listens for an invitation signal in a spatial azimuth at a given frequency for a sufficient length of time. Having not received an invitation signal, it has to scan to the next frequency and azimuth.

I0 => I2 - Reception of an invitation signal triggers this transition. The radio node receives an invitation which includes a schedule for the first exchange with the inviting radio node.

I1 SCAN - The radio node enters this state when its scan timer expires. It then sets up its next listening frequency and spatial azimuth.

I1 => I0 - When the radio node establishes its next listening parameters, it transitions back to the LISTEN state.

I2 CONNECT - The radio node enters this state upon reception of an invitation signal from its first neighbor. An exchange of data from the first neighbor to the new node occurs.

I2 => I2a - The expiration of the exchange timer triggers this transition. This timer was set by the ConnectActions() procedure based on the initial schedule received as part of the invitation signal. The radio node attempts to exchange status and route information with its neighbor.

I2 => I0 - The failure of the initial exchange triggers this transition. The radio node returns to the listen state.

I2 => I3 - A successful first exchange triggers this transition. The radio node updates its neighbor and route tables based on the information gathered in the first exchange and transitions to the LEARN state.

I3 LEARN - The radio node enters this state after the successful completion of its first exchange with a neighbor. The LearnActions() procedure uses the route, status and schedule information that was gathered in the first exchange to schedule subsequent exchanges with other radio nodes in the neighborhood.

I3 => I3a - The exchange timer triggers this transition. The radio node performs an initial exchange with a potential new neighbor through some other neighbor with whom it has already established a schedule. Upon a successful first exchange with the new neighbor, the radio node updates its tables to reflect the neighbor status, routing and scheduling information.

I3 => A0 - The conclusion of the learning process triggers this transition to the node scheduling FSM of Fig. 7. The radio node has finished the admission sequence and is now part of the radio mesh, and is ready to begin normal packet transfer.

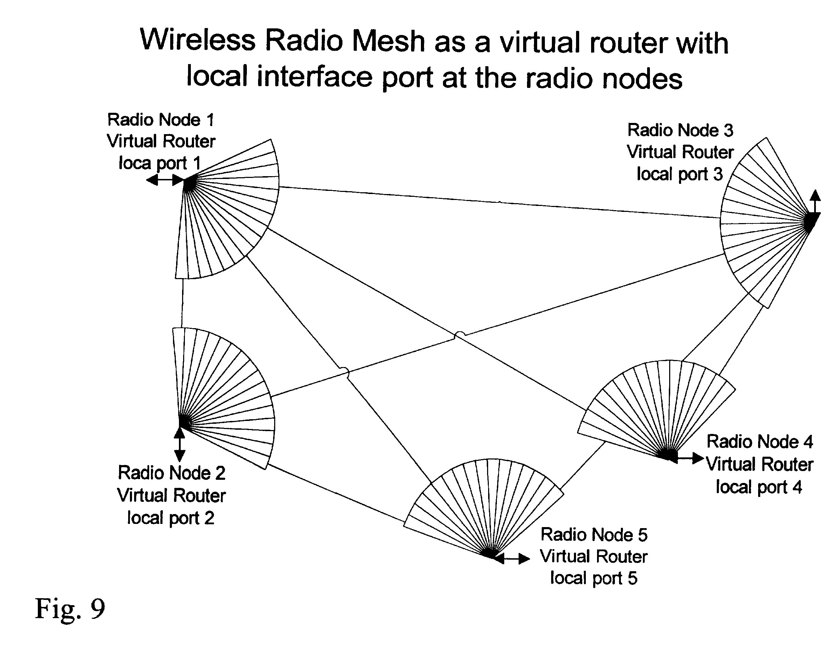

### Wireless Radio Mesh as a Virtual Router with a local interface port at the radio nodes. (See Fig. 9)

Figure 9 depicts the radio mesh as a virtual router with an interface at each radio node. The radio mesh presents an external view of a router and the details of transferring packets between the radio nodes are managed by the mesh radio internal protocols. Each one of the radio nodes is capable of narrow beam transmission to neighbors to which it has line of sight (LOS). Either a beam steering phased array antenna or a switched antenna selection scheme as described above accomplishes this.

### Functionality

The external behavior of the radio mesh (also referred to as a "virtual router") is compliant with IETF RFC-1812 (Requirements for IP Version 4 Routers). The virtual router uses the Mesh Radio Media Access Control (MRMAC) protocol and the Mesh Radio Link Layer Control (MRLLC) protocol, to transfer IP packets between its interfaces.
Internet Architecture
   As in RFC-1812
Link Layer
   As in RFC-1812
Internet Layer - Protocols
   As in RFC-1812
Internet Layer - Forwarding
   As in RFC-1812
Transport Layer
   As in RFC-1812
Application Layer - Routing Protocols
   As in RFC-1812

### Load Balancing

1. Mesh Internal load balancing - The MRMAC incorporates a powerful mechanism for scheduling packet transfers according to neighboring node load conditions as well as IP type of service and priority.
2. External interface load balancing - The Virtual Radio Mesh Router (VRMR) uses standard routing protocols such as BGP-4 (IETF RFC-1771) to accomplish policy based routing which includes load balancing between interfaces when multiple routes are available through different interfaces.

### Route Diversity and Self Healing

1. Mesh Internal route diversity - The MRMAC incorporates a powerful mechanism for scheduling packet transfers according to radio link availability as well as IP type of service and priority.
2. External interface route diversity - The Virtual Radio Mesh Router (VRMR) uses standard routing protocols such as BGP-4 (IETF RFC-1771) to learn from its peers the availability of alternative routes.

In conclusion, the Wireless Mesh Topology Network of the current invention has the following unique advantages:

Line of sight (LOS) can be achieved via nearby neighboring radios, by routing packets of data via multiple hops. Thus, the coverage area could be significantly higher than in Point to Multi Point Cell Topology. The wireless mesh network bit rate capacity and availability increases as subscriber density increases.

Each connection can deliver larger amounts of data due to shorter distances between the radios. The radio-received signal to noise ratio is improved and higher modulation techniques can be used to enable higher bit rate transfers.

Multiple trunking - WAN access to the mesh network. An SR network node can act as WAN access point via its local interface port, via 100 Base T for example. This connectivity increases total network capacity by simultaneously transmitting data in and out of the mesh via the WAN access point (See Fig. 2 - WAN access points 1 in SR 14 and 2 in SR 10 ). The access point may include a standard Internet router with at least one port connected to the Radio network node via a 100 base T interface and other nodes connected to the WAN area via OC-3 or OC-48 IP over ATM.

Route diversity, is achieved via the use a MAC layer which can route the packets between the radios based on the available route in the network.

Increased network availability and reliability.

## Claims

1. A wireless mesh network comprising:
a plurality of communication nodes, each node being in line-of-sight with a corresponding subset of nodes, each node comprising:
a radio frequency transmit circuit for transmitting data stream transmissions to other nodes;
a radio frequency receive circuit for receiving data stream transmissions from other nodes;
a local port for connection to a user-provided data system;
a data processing unit coupled to said transmit and receive circuits and to said local port; and
spatial flow determination means, coupled to said transmit circuit, for transmitting data streams only to selected nodes in said corresponding subset of nodes;
said spatial flow determination means further being coupled to said receive circuit for receiving data stream transmissions only from selected nodes in said corresponding subset of nodes;
said data processing unit having extraction means for extracting selected data from a received data stream to produce a second data stream and for providing said selected data to said local port;
said data processing unit further having insertion means for inserting data received at said local port into said second data stream to produce a third data stream and for providing said third data stream to said transmit circuit for transmission thereof.

2. The wireless communication network of claim 1 wherein at least some of said nodes include status and scheduling information of others of said nodes, and wherein said spatial flow determination means selects nodes from said corresponding subset of nodes for transmission of data streams and reception of data streams based on said status and scheduling information, whereby communication among said nodes can occur without collisions.

3. The wireless communication network of claim 2 wherein said at least some of said nodes further include means for periodically transmitting local node information to each other in order to constantly update said status and scheduling information.

4. The wireless communication network of claim 1 wherein for some of said nodes, said data processing unit includes: means for assessing a characteristic of a received data stream transmission from a first node; means for communicating to said first node information relating to said characteristic; and means for adjusting operating parameters of said transmit and receive circuits to effectuate a change in said characteristic of data stream transmissions in response to receiving said information from said first node.

5. The wireless communication network of claim 4 wherein said operating parameters of said transmit and receive circuits include: a frequency channel allocation, a spatial direction, a symbol rate, a modulation level, a modulation rate, a power level, a beam width, a Forward Error Correction (FEC) scheme, and an encryption and decryption scheme.

6. The wireless communication network of claim 1 wherein said data streams are organized as packets of data; wherein at least some of said nodes include transmission mode means for transmitting said data packets between first and second nodes in any one of a connectionless manner, a connection-oriented manner, or a manner where some of said data packets are transmitted in a connectionless manner and others of said data packets are transmitted in a connection-oriented manner.

7. The wireless network of claim 1 wherein some of said nodes include a Media Access Control (MAC) Layer that enables Packet Switching mode, Circuit Switching mode, or both modes of data stream transmissions.

8. The wireless network of claim 7 wherein said MAC layer further enables asynchronous packet and isochronous packet transmissions.

9. The wireless communication network of claim 1 wherein at least some of said nodes communicate using one of isochronous transmission mode, asynchronous transmission mode, or both isochronous and asynchronous transmission modes.

10. The wireless network of claim 9 wherein said nodes transfer information using a MAC Layer that enables Isochronos transfer with mapping to the Internet Protocol Quality of Service (Qos).

11. The wireless communication network of claim 1 wherein said data streams comprise one or more packets of data and wherein said data packets of at least some of said nodes can be selectively transmitted based on either an isochronous transmission scheme or an asynchronous transmission scheme.

12. The wireless communication network of claim 1 wherein said data stream transmissions of at least some of said nodes are based on a time division duplex scheme.

13. The wireless communication network of claim 1 wherein said data stream transmissions of at least some of said nodes are based on a code division multiple access scheme.

14. The wireless communication network of claim 1 wherein for each node in a first subset of nodes said transmit circuit operates at a first frequency and said receive circuit operates at a second frequency; wherein for each node in a second subset of nodes said transmit circuit operates at said second frequency and said receive circuit operates at said first frequency; said data stream transmissions between nodes in said first subset and nodes in said second subset being based on a frequency division duplex scheme.

15. The wireless network of claims 1, 2, 4 or 6 wherein one of said local ports is coupled to a local area network (LAN), a wide area network (WAN), a multi-media bus, or a user-provided computing system.

16. The wireless network of claims 1, 2, 4 or 6 wherein one of said local ports is connected to an ATM switch, an IP router, an IP switch, or an Ethernet hub.

17. The wireless network of claims 1, 2, 4 or 6 wherein said transmit and said receive circuits operate at frequencies between 0.5 GHz and 1000 GHz.

18. The wireless network of claims 1, 2, 4 or 6 wherein at least one of said nodes includes means for adjusting a bit rate of its data stream transmissions based on status information relating to a subset of said nodes.

19. The wireless network of claims 1, 2, 4 or 6 wherein said transmit and receive circuits include circuitry to adjust the operating frequency spectrum in real time, thereby reducing interference and increasing frequency reuse.

20. The wireless network of claims 1, 2, 4 or 6 wherein said data stream is organized into a plurality of packets of data and wherein said spatial flow determination means selects nodes from among said corresponding subset of nodes based on information contained in said packets of data, so that nodes are selected in real time.

21. The wireless network of claims 1, 2, 4 or 6 wherein said local port includes a 10/100 Base-T interface or an IEEE 1394 interface.

22. The wireless network of claims 1, 2, 4 or 6 wherein one of said nodes can receive its electrical power via a separate cable, via separate wires inside said cable, or via a cable that is coupled to said local port.

23. The wireless network of claims 1, 2, 4 or 6 wherein said data streams include routing information, and said spatial flow determination means selects nodes from said corresponding subset of nodes based on said routing information, whereby said network acts as a virtual wireless router.

24. The wireless network of claims 1, 2, 4 or 6 wherein said spatial flow determination means selects nodes from said corresponding subset of nodes based on external information transmitted from others of said nodes or provided from said local port.

25. The wireless network of claim 24 wherein said local port is coupled to a network management system, to define and optimize system parameters.

26. The wireless network node of claims 1, 2, 4 or 6 said spatial flow determination means is coupled to one of a beam steering phased array antenna and an array of multiple sector antennas.

27. The wireless network node of claim 26, wherein said beam steering phased array antenna includes a one dimensional antenna array to confine beam steering to a single plane and said array of multiple sector antennas includes an array of one dimensional antennas to confine beam steering to a single plane.

28. The wireless network node of claim 26, wherein said beam steering phased array antenna includes means for rapidly changing phase coefficients of elements comprising said array antenna to change its steering direction.

29. The wireless network node of claim 26 wherein a plane of a produced beam contains the trajectory of at least one low orbit satellite.

30. The wireless network node of claims 1, 2, 4 or 6 said spatial flow determination means includes a beam circuit which generates a first beam having a first angle and propagating in a first plane and a second beam having an angle less than said first angle and propagating in a plane different from said first plane.

31. The network node of claim 30 wherein the plane of one of said first and second beams contains the trajectory of at least one low orbit satellite.

32. The wireless network of claims 1, 2, 4 or 6 wherein said transmit circuitry of at least one of said nodes includes circuitry for selecting a polarization of a data stream transmission.

33. The wireless network of claims 1, 2, 4 or 6 wherein some of said nodes include means for recording routing information through said network and wherein said spatial flow determination means selects nodes from said corresponding subset of nodes in response to said routing information, whereby routing tasks including load balancing and self healing can be accomplished.

34. The wireless network of claims 1, 2, 4 or 6 wherein said data streams comprise packets of data in the form of Internet Protocol data.

35. The wireless network of claims 1, 2, 4 or 6 wherein said data streams comprise packets of data in the form of Internet Protocol data and at least some of said nodes include a wireless MAC layer for coordinating the transmission of said IP data among said nodes.

36. The wireless network of claims 1, 2, 4 or 6 wherein said data processing unit includes means for encrypting and means for decrypting said data streams.

37. The wireless network of claims 1, 2, 4 or 6 wherein some of said nodes further include means for decrypting said selected data delivered to said local port and means for encrypting said data received from said local port.

38. The wireless network of claims 1, 2, 4 or 6 wherein at least one of said nodes includes means for establishing communications with a new node and means for exchanging information with said new node, whereby said new node learns about said network based on information obtained from said at least one node.

39. The wireless network of claims 1, 2, 4 or 6 wherein said data processing units of a subset of said nodes include means for receiving externally provided information to configure said subset of nodes.
